# EUROPÄISCHE PATENTSCHRIFT

(11) **EP 0 631 561 B1**
(45) Veröffentlichungstag und Bekanntmachung des Hinweises auf die Patenterteilung: **02.01.1997**
(21) Anmeldenummer: 94905719.4
(22) Anmeldetag: 27.01.1994
(51) Int. Cl.: B65G 47/84

(54) **STERNRAD FÜR GEFÄSSE-TRANSPORTVORRICHTUNG**
STAR-SHAPED WHEEL FOR VESSEL-TRANSPORTING DEVICE
ROUE EN ETOILE POUR DISPOSITIF DE TRANSPORT DE RECIPIENTS

(30) Priorität: 28.01.1993 DE 9301126 U
(43) Veröffentlichungstag der Anmeldung: 04.01.1995
(73) Patentinhaber: Kronseder, Hermann, D-93086 Wörth (DE)
(72) Erfinder: Kronseder, Hermann, D-93086 Wörth (DE)
(74) Vertreter: Grünecker, Kinkeldey, Stockmair & Schwanhäusser Anwaltssozietät
(86) Internationale Anmeldenummer: EP9400226
(87) Internationale Veröffentlichungsnummer: WO9416976

(56) Entgegenhaltungen:
- EP-A- 0 290 074
- EP-A- 0 316 001
- FR-A- 735 047
- GB-A- 1 068 465

## Beschreibung

Die Erfindung betrifft eine Transportvorrichtung für Gefäße gemäß dem Oberbegriff des Anspruchs 1.

Es ist bereits eine derartige Transportvorrichtung bekannt, bei der die Aufnahme scheibenförmig ausgebildet ist und einen kreisförmigen Außenrand aufweist (EP-A-316 001). Auf diesem Außenrand liegt der ringförmige Sternkranz entweder mit seinem gesamten inneren Randbereich oder mit mehreren sektorartig nach innen ragenden Ansätzen großflächig auf und wird durch mehrere einzeln oder gemeinsam betätigbare Riegel gehalten. Diese Bauweise ermöglicht ein müheloses und schnelles Austauschen des Sternkranzes, z.B. bei der Umstellung auf einen anderen Gefäßdurchmesser, da die Aufnahme vollständig auf der Antriebswelle verbleibt und somit nur der leichte Sternkranz manipuliert werden muß.

Ungünstig ist jedoch die großflächige, für Reinigungsmittel schwer zugängliche Kontaktzone zwischen Aufnahme und Sternkranz, in der sich Fremdstoffe festsetzen und Keimherde bilden können. Die Gefahr von Verschmutzungen und Infektionen der mit der bekannten Transportvorrichtung geförderten Gefäße ist daher groß, was z.B. einem Einsatz in Anlagen zum aseptischen Abfüllen von Getränken im Wege steht. Bei der Ausführung mit nach innen ragenden Ansätzen am Sternkranz kommt eine eingeschränkte Handlichkeit des Sternkranzes hinzu.

Der Erfindung liegt die Aufgabe zugrunde, bei einer Transportvorrichtung der eingangs genannten Art unter Beibehaltung der mühelosen und schnellen Austauschbarkeit des Sternkranzes die Gefahr von Verschmutzungen und Infektionen der transportierten Gefäße spürbar zu senken.

Diese Aufgabe wird erfindungsgemäß durch die im Kennzeichen des Anspruchs 1 angegebenen Merkmale gelöst.

Bei einer erfindungsgemäßen Transportvorrichtung wird die Kontaktzone zwischen Aufnahme und Sternkranz auf die Berührungsbereiche zwischen den Auslegern und dem Sternkranz reduziert, die aufgrund des relativ geringen Gewichts des üblicherweise aus Kunststoff bestehenden Sternkranzes sowohl zahlen- als auch flächenmäßig sehr klein gehalten werden können. Die Möglichkeit des Festsetzens von Fremdstoffen und Keimen wird dadurch wesentlich verringert und die Reinigungsmöglichkeit wird verbessert. Am Sternkranz selbst sind zur Abstützung auf der Aufnahme keinerlei Ansätze oder dgl. erforderlich, so daß dieser leichtgewichtig gebaut und einfach manipuliert werden kann.

Vorteilhafte Weiterbildungen der Erfindung, die alle zur Lösung der zugrundeliegenden Aufgabe beitragen, sind in den Unteransprüchen enthalten.

Im Nachstehenden wird ein Ausführungsbeispiel der Erfindung anhand der Zeichnungen beschrieben. Es zeigen:
- Fig. 1: die Draufsicht auf eine Transportvorrichtung für Gefäße,
- Fig. 2: den Schnitt A-B nach Fig. 1.

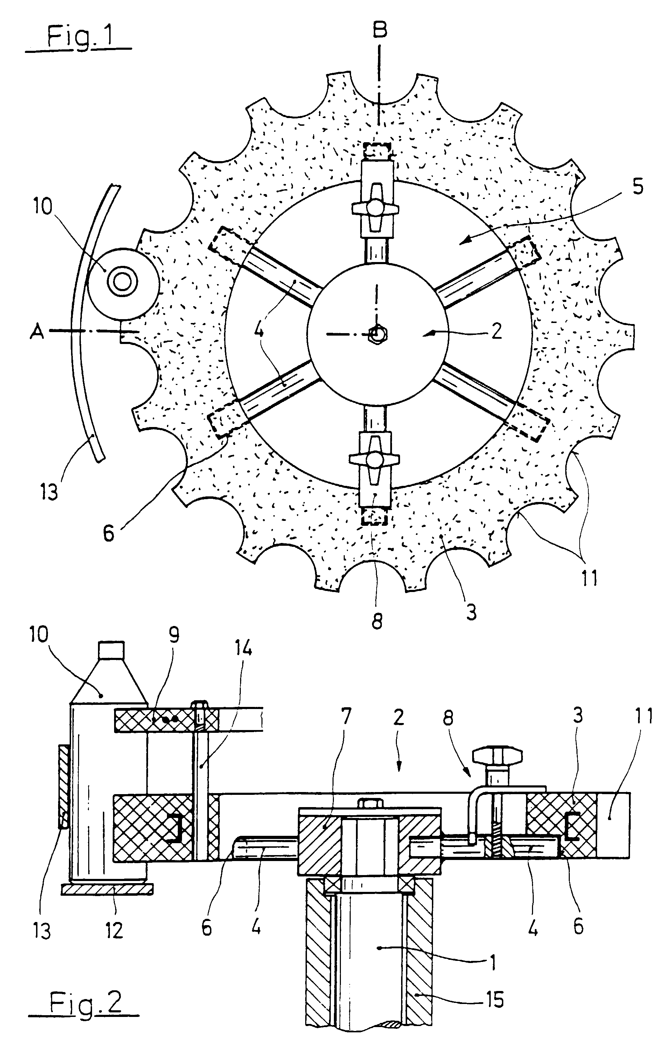

Die Transportvorrichtung nach Fig. 1 und 2 ist in eine nicht weiter dargestellte Füllmaschine integriert und zum Fördern von aufrechtstehenden leeren Flaschen 10 für Getränke eingerichtet.

Die Transportvorrichtung weist eine Aufnahme 2 aus Metall und einen lösbar auf dieser befestigten Sternkranz 3 aus Kunststoff mit einer metallischen Stützeinlage auf. Der Sternkranz 3 ist am Umfang mit halbkreisförmigen Sterntaschen 11 versehen, in welchen die Flaschen 10 durch Stützelemente 12 und Führungselemente 13 gehalten werden.

Die Aufnahme 2 besitzt eine Nabe 7, die auf einer senkrechten Antriebswelle 1 mit einem Lagerflansch 15 befestigt ist. Am Umfang der Nabe 7 sind nach Art von Speichen gleichmäßig verteilt sechs Rundstangen 4 mit radialer Ausrichtung in einer gemeinsamen horizontalen Ebene befestigt. Die Rundstangen 4 bilden Ausleger, auf deren freien äußeren Enden der Sternkranz 3 im Bereich seines inneren unteren Randes aufliect. Der Sternkranz 3 ist im Auflagebereich mit an die Kontur der Rundstangen 4 angepassten, nach innen und nach unten hin durchgehend offenen Ausnehmungen 6 mit U-förmigem Querschnitt versehen, welche die Enden der Rundstangen 4 aufnehmen. Die Ausnehmungen 6 bewirken in Verbindung mit den Rundstangen 4 neben einer Drehmomentübertragung auch eine selbsttätige Zentrierung des Sternkranzes 3 bezüglich der Drehachse der Antriebswelle 1. Eine zusätzliche Zentrierung oder Aufnahme von Biegekräften, die auf den Sternkranz 3 einwirken, kann über die äußeren Stirnflächen der Rundstangen 4 und die diesen gegenüberliegenden Flächen der Ausnehmungen 6 erfolgen. Um ein lagegerechtes Aufsetzen des Sternkranzes 3 zu erzwingen, ist eine der Rundstangen 4 etwas kürzer, genauso wie die zugehörige Ausnehmung 6.

Die halbzylindrischen Kontaktflächen zwischen den Rundstangen 4 und dem Sternkranz 3 sind flächenmäßig sehr klein, nach oben hin abgedeckt und nach unten hin offen, so daß die Gefahr des Festsetzens von Keimen oder Fremdstoffen sehr gering ist bzw. eine gute Zugänglichkeit für Reinigungs- und Desinfektionsmittel vorliegt.

An zwei um 180 Grad gegeneinander versetzten Rundstangen 4 sind Befestigungsmittel 8 für den Sternkranz 3 angeordnet. Diese bestehen jeweils aus einem Gewindebolzen mit Sterngriff, der direkt in eine Rundstange 4 eingeschraubt ist, und einen durch diesen betätigten Winkelhebel, der sich einerseits auf der Rundstange 4 und andererseits auf der Oberseite des Sternkranzes 3 abstützt und so den Sternkranz 3 auf der Aufnahme 2 festklemmt. Nach teilweisem Herausschrauben der Gewindebolzen und Schwenken der Winkelhebel kann der Sternkranz 3 rasch und mühelos von den Rundstangen 4 abgenommen und durch einen anderen Sternkranz ersetzt werden.

Für die Ausbildung der Befestigungsmittel sind selbstverständlich auch andere Ausführungen denkbar. So können diese z.B. an der Nabe 7 angeordnet werden. Ferner ist es möglich, einen oder mehrere Rundstangen 4 selbst als Riegel zu verwenden, indem diese radial verstellbar in der Nabe 7 aufgenommen werden und mit einer entsprechenden Sackbohrung im Sternkranz 3 korrespondieren.

Die vorbeschriebene Bauweise einer Transportvorrichtung mit durch Rundstangen 4 gebildeten Auslegern für die Halterung des Sternkranzes ist auf einfache Weise durch Verkürzen oder Verlängern der Rundstangen 4 für die verschiedensten Sternkranzdurchmesser einsetzbar. Der zwischen den Rundstangen 4 gebildete Freiraum 5 zwischen der Nabe 7 und dem inneren Rand des Sternkranzes 3, durch den Scherben und Gefäßbruchstücke ungehindert nach unten hin wegfallen können, kann sich dabei bis auf einen schmalen Spalt verringern, wobei sich die Rundstangen auf eine bolzenartige Form verkürzen. Auch diese Bauweise hat alle wesentlichen Vorteile der Erfindung einschließlich der niedrigen Herstellungskosten.

Wie auf der linken Seite von Fig. 2 angedeutet ist, kann auf dem Sternkranz 3 ein konzentrischer Sternring 9 über freistehende Distanzbolzen 14 befestigt werden. Diese Bauweise ist beim Transport von höheren Gefäßen angebracht. Der "keimfreie" Aufbau der Transportvorrichtung wird dadurch nicht beeinträchtigt, da aufgrund der Abstützung des oberen Sternrings 9 über freistehende Distanzbolzen 14 keine zusätzlichen Ringspalte gebildet werden.

## Patentansprüche

1. Transportvorrichtung für Gefäße mit einer mit einer Antriebswelle (1) verbundenen Aufnahme (2) und einen auf dieser lösbar befestigten und zentrierten Sternkranz (3), dadurch gekennzeichnet, daß die Aufnahme (2) über ihren Umfang verteilt mehrere abstehende Ausleger (4) aufweist, auf deren freien Enden der Sternkranz (3) aufliegt.

2. Transportvorrichtung nach Anspruch 1, dadurch gekennzeichnet, daß der Sternkranz (3) ausschließlich auf den freien Enden der Ausleger (4) aufliegt und auf diesen zentriert ist.

3. Transportvorrichtung nach Anspruch 1 oder 2, dadurch gekennzeichnet, daß der Sternkranz (3) im Bereich seines inneren, unteren Randes auf den freien Enden der Ausleger (4) aufliegt.

4. Transportvorrichtung nach Anspruch 3, dadurch gekennzeichnet, daß der innere Rand des Sternkranzes (3) im wesentlichen rotationssymmetrisch ausgebildet ist.

5. Transportvorrichtung nach einem der Ansprüche 1 bis 4, dadurch gekennzeichnet, daß die Ausleger (4) gleichmäßig über den Umfang der Aufnahme (2) verteilt sind.

6. Transportvorrichtung nach einem der Ansprüche 1 bis 5, dadurch gekennzeichnet, daß drei bis sechs Ausleger (4) vorgesehen sind.

7. Transportvorrichtung nach einem der Ansprüche 1 bis 6, dadurch gekennzeichnet, daß die Ausleger (4) im wesentlichen radial zur Drehachse angeordnet sind.

8. Transportvorrichtung nach Anspruch 7, dadurch gekennzeichnet, daß der umfangsmäßige Abstand zwischen zwei von benachbarten Auslegern (4) gebildeten Auflageflächen für den Sternkranz (3) um ein Mehrfaches größer ist als die umfangsmäßige Abmessung einer Auflagefläche.

9. Transportvorrichtung nach Anspruch 7 oder 8, dadurch gekennzeichnet, daß zwischen dem inneren Rand des Sternkranzes (3) und der Aufnahme (2) ein nur durch die Ausleger (4) unterbrochener Freiraum (5) gebildet ist.

10. Transportvorrichtung nach einem der Ansprüche 1 bis 9, dadurch gekennzeichnet, daß der Sternkranz (3) im Bereich des inneren, unteren Randes mit nach innen und nach unten hin offenen Ausnehmungen (6) versehen ist, in welche die freien Enden der Ausleger (4) eingreifen.

11. Transportvorrichtung nach einem der Ansprüche 1 bis 10, dadurch gekennzeichnet, daß die Aufnahme (2) eine auf der Antriebswelle (1) befestigte Nabe (7) und mehrere an dieser befestigte, speichenartig abstehende Stangen (4) oder Bolzen aufweist, welche die den Sternkranz (3) tragenden Ausleger bilden.

12. Transportvorrichtung nach Anspruch 11, dadurch gekennzeichnet, daß die die Ausleger bildenden Stangen (4) oder Bolzen einen kreisförmigen Querschnitt aufweisen.

13. Transportvorrichtung nach einem der Ansprüche 10 bis 12, dadurch gekennzeichnet, daß zur Lagebestimmung des Sternkranzes (3) ein Ausleger (4) und die zugehörige Ausnehmung (6) kürzer sind als die übrigen.

14. Transportvorrichtung nach einem der Ansprüche 1 bis 13, dadurch gekennzeichnet, daß auf mindestens einem Ausleger (4) ein lösbares Befestigungsmittel (8) für den Sternkranz (3) angeordnet ist.

15. Transportvorrichtung nach einem der Ansprüche 1 bis 13, dadurch gekennzeichnet, daß mindestens einer der Ausleger (4) riegelartig verstellbar ist und in eine entsprechende Ausnehmung im Sternkranz (3) zu dessen lösbarer Fixierung eingreift.

16. Transportvorrichtung nach einem der Ansprüche 1 bis 15, dadurch gekennzeichnet, daß mit dem Sternkranz (3) über mehrere freistehende Distanzbolzen (14) mindestens ein Sternring (9) verbunden ist.

## Claims

1. A transport device for vessels comprising a reception means (2) connected to a drive shaft (1), and a star collar (3) releasably secured to said reception means ana centered thereon, characterized in that the reception means (2) is provided with a plurality of extension arms (4) which project therefrom and which are distributed over the circumference thereof, the star collar (3) resting on the free ends of said extension arms (4).

2. A transport device according to claim 1, characterized in that the star collar (3) rests exclusively on the free ends of the extension arms (4) and is centered thereon.

3. A transport device according to claim 1 or 2, characterized in that the star collar (3) rests on the free ends of the extension arms (4) in the area of its inner, lower rim.

4. A transport device according to claim 3, characterized in that the inner rim of the star collar (3) has an essentially rotationally symmetrical structural design.

5. A transport device according to one of the claims 1 to 4, characterized in that the extensions arms (4) are uniformly distributed over the circumference of the reception means (2).

6. A transport device according to one of the claims 1 to 5, characterized in that three to six extension arms (4) are provided.

7. A transport device according to one of the claims 1 to 6, characterized in that the extension arms (4) are arranged essentially radially with respect to the axis of rotation.

8. A transport device according to claim 7, characterized in that the circumferential distance between two support surfaces defined by neighbouring extension arms (4) and used for supporting the star collar (3) is many times larger than the circumferential dimension of one support surface.

9. A transport device according to claim 7 or 8, characterized in that a free space (5) is defined between the inner rim of the star collar (3) and the reception means (2), said free space (5) being only interrupted by the extension arms (4).

10. A transport device according to one of the claims 1 to 9, characterized in that, in the area of said inner, lower rim, the star collar (3) is provided with recesses (6) which are open towards the inside and at the bottom thereof and which are engaged by the free ends of the extension arms (4).

11. A transport device according to one of the claims 1 to 10, characterized in that the reception means (2) comprises a hub (7), which is secured to the drive shaft (1), and a plurality of rods (4) or bolts secured to said hub (7), said rods or bolts projecting from said hub like spokes and defining the extension arms which support the star collar (3).

12. A transport device according to claim 11, characterized in that the rods (4) or bolts defining the extension arms have a circular cross-section.

13. A transport device according to one of the claims 10 to 12, characterized in that, for the purpose of determinign the position of the star collar (3), one extension arm (4) and the associated recess (6) are shorter than the other ones.

14. A transport device according to one of the claims 1 to 13, characterized in that at least one of the extension arms (4) has arranged thereon a releasable fastening means (8) for the star collar (3).

15. A transport device according to one of the claims 1 to 13, characterized in that at least one of said extension arms (4) is adapted to be displaced like a locking bar and engages a complementary recess in the star collar (3) for releasably fixing said star collar (3).

16. A transport device according to one of the claims 1 to 15, characterized in that the star collar (3) has connected thereto at least one star ring (9) via a plurality of freestanding spacer bolts (14).

## Revendications

1. Dispositif de transport pour récipients, comprenant un support (2) couplé avec un arbre moteur (1), et une couronne en étoile (3) montée et centrée sur le support de manière amovible,
**caractérisé en** ce que le support (2) comporte, répartis sur sa périphérie, une pluralité de bras (4) en saillie sur les extrémités libres desquels repose la couronne en étoile (3).

2. Dispositif de transport selon la revendication 1, caractérisé en ce que la couronne en étoile (3) repose et est centrée exclusivement sur les extrémités libres des bras (4).

3. Dispositif de transport selon la revendication 1 ou 2, caractérisé en ce que la couronne en étoile (3) repose dans la région de son bord inférieur intérieur sur les extrémités libres des bras (4).

4. Dispositif de transport selon la revendication 3, caractérisé en ce que le bord intérieur de la couronne en étoile (3) est sensiblement à symétrie de révolution.

5. Dispositif de transport selon l'une des revendications 1 à 4, caractérisé en ce que les bras (4) sont répartis uniformément sur la périphérie du support (2).

6. Dispositif de transport selon l'une des revendications 1 à 5, caractérisé en ce que trois à six bras (4) sont prévus.

7. Dispositif de transport selon l'une des revendications 1 à 6, caractérisé en ce que les bras (4) sont disposés sensiblement radialement à l'axe de rotation.

8. Dispositif de transport selon la revendication 7, caractérisé en ce que la distance circonférentielle entre deux surfaces d'appui pour la couronne en étoile (3) formées par des bras (4) voisins est plus grande d'un multiple que la dimension circonférentielle d'une surface d'appui.

9. Dispositif de transport selon la revendication 7 ou 8, caractérisé en ce qu'entre le bord intérieur de la couronne en étoile (3) et le support (2) est formé un espace libre (5) qui n'est interrompu que par les bras (4).

10. Dispositif de transport selon l'une des revendications 1 à 9, caractérisé en ce que la couronne en étoile (3) est munie, dans la région du bord inférieur intérieur, d'évidements (6) ouverts vers l'intérieur et vers le bas dans lesquels s'engagent les extrémités libres des bras (4).

11. Dispositif de transport selon l'une des revendications 1 à 10, caractérisé en ce que le support (2) comprend un moyeu (7) monté sur l'arbre moteur (1), et plusieurs barres (4) ou boulons fixés sur le moyeu et dépassant à la manière de rayons, qui forment les bras portant la couronne en étoile (3).

12. Dispositif de transport selon la revendication 11, caractérisé en ce que les barres (4) ou boulons formant les bras présentent une section transversale circulaire.

13. Dispositif de transport selon l'une des revendications 10 à 12, caractérisé en ce que, pour le positionnement de la couronne en étoile (3), un bras (4) et l'évidement (6) associé sont plus courts que les autres.

14. Dispositif de transport selon l'une des revendications 1 à 13, caractérisé en ce que sur au moins un bras (4) est disposé un moyen de fixation (8) amovible pour la couronne en étoile (3).

15. Dispositif de transport selon l'une des revendications 1 à 13, caractérisé en ce qu'au moins l'un des bras (4) est mobile à la manière d'un verrou et s'engage dans un évidement correspondant dans la couronne en étoile (3) pour la fixation amovible de celle-ci.

16. Dispositif de transport selon l'une des revendications 1 à 15, caractérisé en ce qu'au moins une bague en étoile (9) est couplée avec la couronne en étoile (3) par l'intermédiaire de plusieurs boulons d'écartement (14) isolés.
